# EUROPEAN PATENT APPLICATION

(11) **EP 4 631 739 A1**
(43) Date of publication of application: **15.10.2025**
(21) Application number: 23918374.2
(22) Date of filing: 26.01.2023
(51) Int. Cl.: B60B 7/00, B60B 7/16

(54) **DESIGN COVER FOR ALUMINUM WHEEL**

(71) Applicant: Union Create Co., Ltd., Yawata-shi, Kyoto 614-8142 (JP)
(72) Inventor: WAKAMURA Ryo, Yawata-shi, Kyoto 614-8142 (JP)
(74) Representative: Rogozinska, Alicja
(86) International application number: PCT/JP2023/002388
(87) International publication number: WO 2024/157409

(57) **Abstract**

[Problem] To provide a design cover for an aluminum wheel which enables suppression of vibration at the time of rotation of a tire of a vehicle while employing a rotationally asymmetric design. [Solution] A design cover 10 for an aluminum wheel according to the invention is characterized by comprising: a design cover part 12 which is mounted to an aluminum wheel 2 having a rotationally symmetric design and has a rotationally asymmetric design; and a balance adjustment weight part 16 provided in the design cover part 12 so as to suppress vibration when the design cover part 12 is mounted to the aluminum wheel 2 and the tire of the vehicle is rotated.

## Description

### TECHNICAL FIELD

The present invention relates to design covers for aluminum wheels.

### BACKGROUND ART

Wheel covers have been conventionally developed to enhance the design of vehicle tire wheels. As technology related to the present invention, Patent Document 1, for example, discloses a decorative aluminum wheel with improved design quality by means of a configuration in which a recess is formed in the design surface of the aluminum wheel in advance, and to the recess in the design surface, a decorative component is attached to form a design that is unified with the aluminum wheel. The aluminum wheel has a spoke part having a substantially M-shaped cross section with a flat surface in the center along the width of the M, the spoke part of the design surface of the aluminum wheel is provided with the recess formed as the M-shaped dent in the center portion along the width, the recess has a bottom surface formed as a flat surface in the center along the width of the M and meanwhile is open to the design surface, and with a space present between the bottom surface of the recess and the reverse side of the decorative component, the decorative component is installed in the recess in such a way as to be lifted off the bottom surface of the recess.

Furthermore, Patent Document 2 discloses a decorative light-alloy wheel constituted from: a light-alloy wheel having an outer surface, and a recess recessed from the outer surface in a face that is a portion of the outer surface including at least the spoke part; and a decorative component manufactured as a piece separate from the light-alloy wheel and replaceably fit into the recess; wherein the light-alloy wheel and the decorative component cooperate to constitute a design surface, the decorative component forms a portion of the design surface, the light-alloy wheel and the decorative component are removably fastened to each other at the inner and outer peripheries of the decorative component, and for fastening the decorative component, at least one of a first fastening means for fastening by passing a bolt fixed to the decorative component through a bolt hole formed in the light-alloy wheel and screwing the bolt into a nut and a second fastening means for fastening by engaging an engaging claw provided on the decorative component with the light-alloy wheel is utilized.

### RELATED ART DOCUMENTS

### PATENT DOCUMENTS

Patent Document 1: JP2006-306396A
Patent Document 2: JP2006-199295A

### SUMMARY OF THE INVENTION

### PROBLEM TO BE SOLVED BY THE INVENTION

Conventional wheel covers are limited to rotationally symmetrical designs that mimic aluminum wheels with spoke, dish, or other shapes in order to suppress vibrations caused when the vehicle tires rotate, which can be bland.

An objective of the present invention is to provide an aluminum-wheel design cover that, while employing a rotationally asymmetric design, is enabled for suppressing vibrations caused when vehicle tires rotate.

### MEANS FOR SOLVING THE PROBLEMS

An aluminum-wheel design cover involving the present invention includes a design cover part that has a rotationally asymmetric design and is configured to be fitted onto a vehicle aluminum wheel having a rotationally symmetric design, and a balance-adjustment weight part provided on the design cover part in such a manner as to suppress vibrations when the design cover part is fitted onto the vehicle aluminum wheel and a vehicle tire is rotated.

In the aluminum-wheel design cover involving the present invention, it is preferable that the design cover part have an anti-theft mechanism for theft prevention when fitted onto the vehicle aluminum wheel.

In the aluminum-wheel design cover involving the present invention, it is preferable that the design cover part and the vehicle aluminum wheel be fastened with a plurality of screw components, the plurality of screw components including a right-hand threaded right screw part that advances when turned rightward, rotation of which is restricted at a certain torque or higher, causing a head section thereof to come off when turned further, and retracts when turned leftward, and a left screw part that advances when turned leftward, rotation of which is restricted at a certain torque or higher, causing a head section thereof to come off when turned further, and retracts when turned rightward, and that the anti-theft mechanism be constituted by containing the right screw part and the left screw part.

### EFFECTS OF THE INVENTION

According to the present invention, while a rotationally asymmetric design is employed, vibrations caused when vehicle tires rotate can be suppressed.

### BRIEF DESCRIPTION OF DRAWINGS

Fig. 1 is a diagram representing a situation in which an aluminum-wheel design cover of an embodiment according to the present invention is fitted onto an aluminum wheel.
Fig. 2 is a diagram representing variation products of the aluminum-wheel design cover of an embodiment according to the present invention.

### DESCRIPTION OF EMBODIMENT

Hereinafter, a mode of embodying the present invention is explained in detail with reference to the accompanying drawings. In the following, like elements are assigned the same reference numerals in all the figures in the drawings, and a repeated description is omitted. In addition, in the description in the text, the reference numerals mentioned previously are used if necessary.

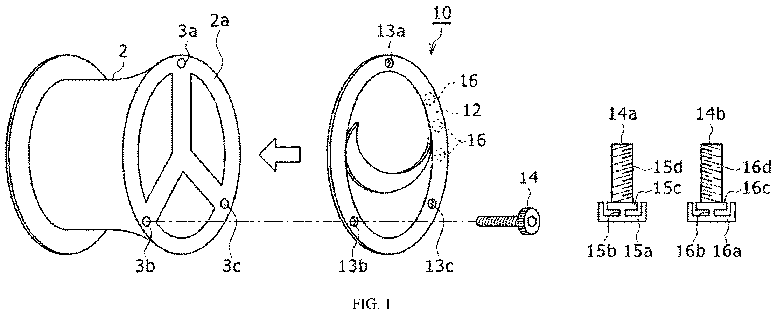

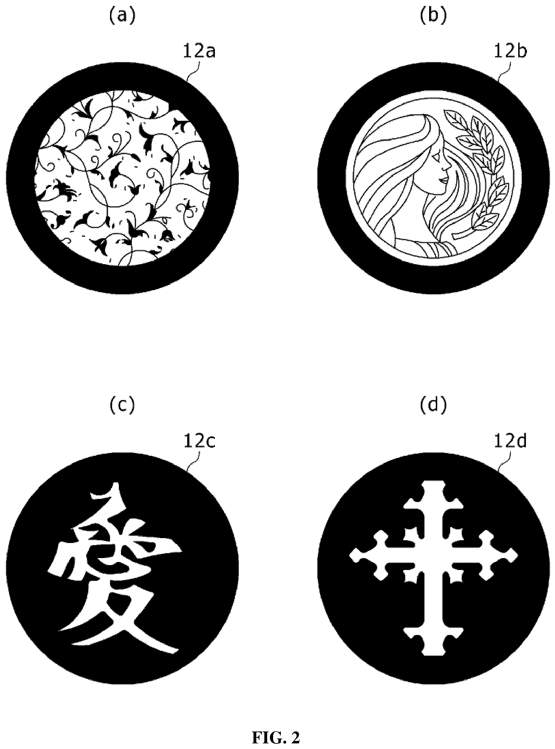

Fig. 1 is a diagram representing a situation in which an aluminum-wheel design cover 10 of an embodiment according to the present invention is fitted onto an aluminum wheel 2. Fig. 2 is a diagram representing variation products of the aluminum-wheel design cover 10 of an embodiment according to the present invention.

The aluminum-wheel design cover 10 is a wheel cover for fitting onto an aluminum wheel 2 of an automobile tire. The aluminum-wheel design cover 10 includes a design cover part 12 and a balance-adjustment weight part 16.

The aluminum wheel 2 includes a rim part, a hub part, and a plurality of spoke parts connecting the rim part and the hub part. As for the number of the plurality of spork parts described here, three is sufficient, but of course four or more is also acceptable.

In the hub part, a single hub hole is formed, and around the hub hole, a plurality of bolt holes through which hub bolts for fastening the wheel onto the hub of an axle shaft pass are formed. Between the spoke parts, ornamental windows are formed.

The aluminum wheel 2 has a rotationally symmetric design. The rotationally symmetric design includes spoke shapes, fin shapes, mesh shapes, and dish shapes. It will be appreciated that rotational symmetry is a group of symmetries that characterize figures. Letting n be an integer greater than or equal to 2, then the property of a figure overlapping itself when it is rotated about its center (two-dimensional figure) or its axis (three-dimensional figure) by (360/n)° is called n-fold symmetry, rotational symmetry of order n, or (360/n) degree symmetry. For example, when n=3, a 120°rotation results in overlapping with itself in a three-fold symmetry.

As illustrated in Fig. 1, the aluminum wheel 2 includes three screw holes 3a, 3b, and 3c for fitting the design cover part 12 into a fastened state. Here, the description will be given assuming that there are three screw holes 3a, 3b, and 3c, but of course the number is not limited to three but may be, for example, four or more.

The spoke shape is a shape in which spokes (rod components connecting the center and outside of the wheel) are arranged from the center of the wheel toward the outside. The spoke shape has wide openings with superior heat dissipation, and excels in strength, weight, and balance, and so it is often employed on aluminum wheels.

The fin shape, being a design derived from the spoke shape, is a design in which the spokes are thinner and there are more of them than in the spoke shape. It makes it easy to create a delicate and beautiful look for lower parts, and making the spokes thinner also has the effect of making the wheels appear larger.

The mesh shape is a design made up of spokes in a net-like pattern. The fineness of the net creates a sense of luxury and delicacy. Due to its complex design, however, it has the disadvantage of being difficult to maintain.

The dish shape is a flat design in which a disk resembles a dish (plate). It is highly designed, impressively powerful, and massive.

As described above, various types of wheel shapes have been created, but in order to suppress vibrations caused when vehicle tires rotate, the design patterns are rotationally symmetrical, and it is extremely difficult to render a wheel in a shape like, for example, the character for "love."

The design cover part 12 is fitted onto the aluminum wheel 2, and has a rotationally asymmetric design. The design cover part 12 covers the outer design surface of the aluminum wheel 2 of a vehicle. It will be appreciated that rotational asymmetry is a figure that is not of above-described rotational symmetry.

As illustrated in Fig. 1, the design cover part 12 is provided with a rotationally asymmetric figure (a crescent-like shape in Fig. 1) provided straddling the left and right sides in the center of an annular ring component.

The design cover part 12 includes, for screwing together with the screw components 14, three screw holes 13a, 13b, and 13c formed corresponding to the three screw holes 3a, 3b, and 3c in the aluminum wheel 2.

With the design cover part 12 positioned in such a manner that the three screw holes 3a, 3b, and 3c in the aluminum wheel 2 overlap the screw holes 13a, 13b, and 13c in the design cover part 12, the three screw components 14 are screw together with the screw holes 3a, 3b, and 3c and the screw holes 13a, 13b, and 13c, thereby attaching the design cover part 12.

The balance-adjustment weight part 16 is provided on the design cover part 12, in such a manner as to suppress vibrations caused when the rotationally asymmetric design cover part 12 is fitted onto the aluminum wheel 2 and vehicle tires are rotated. Specifically, it is a weight provided in a predetermined position on the rear side of the rotationally asymmetric figure provided on the design cover part 12 in accordance with the weight balance of the figure in such a manner as to suppress vibrations when the vehicle tires rotate.

Here, the design cover part 12 is provided with an anti-theft mechanism in such a manner as to prevent theft by others when fitted onto the aluminum wheel 2. The anti-theft mechanism may be one that emits a warning sound by means of a sensor provided on the design cover part 12 when removed, but herein is realized utilizing the three screw components 14 and the screw holes 3a, 3b, and 3c.

The three screw components 14 each include a right screw part 14a and a left screw part 14b. The anti-theft mechanism is constituted by including at least one right screw part 14a and one left screw part 14b each among from the three screw components 14.

The right screw part 14a is a right-hand threaded screw that advances when turned rightward, rotation of which is restricted at a certain torque or higher, causing the head section to come off when turned further, and retracts when turned leftward.

The right screw part 14a includes a head section 15a, a flange section 15c that protrudes laterally, a constricted section 15b that connects the head section 15a and the flange section 15c, and a trunk section 15d. It will be appreciated that the head section 15a is formed with a thread (for example, the hexagon as illustrated in Fig. 1) for rotating the screw, but the flange section 15c does not have any threads.

As illustrated in Fig. 1, the right screw part 14a is processed in such a manner that the boundary between the head section 15a and the flange section 15c constitutes the constricted section 15b that is smaller in diameter than the trunk section 15d, and if the screw is rotated rightward at a certain torque or higher, the constricted section 15b will break off.

The left screw part 14b is a left-hand threaded screw that advances when turned leftward, rotation of which is restricted at a certain torque or higher, causing the head section to come off when turned further, and retracts when turned rightward. While right-hand threaded screws are generally used, the left screw part 14b is a component that is threaded so as to advance when turned to the left, oppositely as with right-hand threaded screws.

The left screw part 14b includes a head section 16a, a flange section 16c that protrudes laterally, a constricted section 16b that connects the head section 16a and the flange section 16c, and a trunk section 16d. It will be appreciated that the head section 16a is formed with a thread (drive section) for rotating the screw, but the flange section 16c does not have any threads.

As illustrated in Fig. 1, the left screw part 14b is processed in such a manner that the boundary between the head section 16a and the flange section 16c constitutes the constricted section 16b that is smaller in diameter than the trunk section 16d, and if the screw is rotated leftward at a certain torque or higher, the constricted section 16b will break off.

It will be appreciated that the head section 15a of the right screw part 14a and the head section 16a of the left screw part 14b have the same shape in plan view, and therefore cannot be distinguished from each other when viewed in a plane.

Next, the operation of the aluminum-wheel design cover 10 having the above-described configuration will be described. Wheels are circular components that fit onto the inside of tires, transmit vehicle power to the tires, and enhance suspension movement by reducing the lower vehicle weight, thereby improving handling, braking performance, and even ride comfort, and enhancing traveling performance.

Wheels have been created in a variety of designs, including luxury and sporty designs, but there are constraints on the design because a rotationally symmetrical design is employed to suppress vibrations caused during traveling. In addressing such issues, the aluminum-wheel design cover 10 demonstrates a remarkable effectiveness.

According to the aluminum-wheel design cover 10, even if the design of the design cover part 12 is rotationally asymmetric, the balance-adjustment weight part 16 is provided in such a manner as to suppress vibrations when the vehicle is traveling, making a variety of designs available to be enjoyed.

For example, as illustrated in Fig. 2(c), the motif may be based on the character for "love," or it may be based on a cross as illustrated in Fig. 2(d). Of course, designs such as those illustrated in Figs. 2(a) and (b) can also be employed.

In this way, the aluminum-wheel design cover 10 is enabled for designs that are not limited to rotational symmetry such as conventional spoke shapes, yielding the remarkable effectiveness of allowing the vehicle user to enjoy a variety of designs in accordance with their preferences.

The aluminum-wheel design cover 10 makes available a variety of designs to be employed, which increases added value but on the other hand may make possible the risk of theft. Against such theft risks, the aluminum-wheel design cover 10 also demonstrates remarkable effectiveness.

According to the aluminum-wheel design cover 10, three screw components 14 are utilized to screw into the screw holes 3a, 3b, and 3c and the screw holes 13a, 13b, and 13c. Here, the combination of one or more right screw parts 14a and one left screw part 14b is used for screwing.

Since screws are generally recognized to be right-handed, a thief attempting to steal the aluminum-wheel design cover 10 will attempt to loosen the three screw components 14 by rotating them counterclockwise. However, although the one or more right screw parts 14a can be loosened and removed by rotating them counterclockwise, if the left screw part 14b is rotated counterclockwise at a certain torque or higher, the constricted section 16b will break off and the head section 16a will be removed, leaving only the flange section 16c.

For example, among the screw holes 3a, 3b, and 3c and the screw holes 13a, 13b, and 13c, when the left screw part 14b is used in the screw hole 3b and the screw hole 13b, although it fastens the cover via the screw hole 3b and the screw hole 13b with the flange section 16c, it cannot be removed because there is no thread.

As a result, the thief will become impatient and gives up on stealing the aluminum-wheel design cover 10. In this way, it is not possible to determine from the appearance which of the plurality of screw holes the left screw part 14b is fastened to, which yields the remarkable effectiveness of contributing to theft prevention.

### LIST OF REFERENCE NUMERALS

2: Aluminum wheel; 3a, 3b, 3c: Screw holes; 10: Aluminum-wheel design cover; 12: Design cover part; 13a, 13b, 13c: Screw holes; 14: Screw component; 14a: Right screw part; 14b: Left screw part; 15a: Head section; 15b: Constricted section; 15c: Flange section; 15d: Trunk section; 16; Balance-adjustment weight part; 16a: Head section; 16b: Constricted section; 16c: Flange section; 16d:Trunk section.

## Claims

1. An aluminum-wheel design cover comprising:
a design cover part that has a rotationally asymmetric design and is configured to be fitted onto a vehicle aluminum wheel having a rotationally symmetric design; and
a balance-adjustment weight part provided on the design cover part in such a manner to suppress vibrations when the design cover part is fitted onto the vehicle aluminum wheel and a vehicle tire is rotated.

2. The aluminum-wheel design cover according to claim 1,
wherein the design cover part comprises an anti-theft mechanism for theft prevention when fitted onto the vehicle aluminum wheel.

3. The aluminum-wheel design cover according to claim 2,
wherein the design cover part and the vehicle aluminum wheel are fastened with a plurality of screw components,
the plurality of screw components including
a right-hand threaded right screw part that advances when turned rightward, rotation of which is restricted at a certain torque or higher, causing a head section thereof to come off when turned further, and retracts when turned leftward, and
a left screw part that advances when turned leftward, rotation of which is restricted at a certain torque or higher, causing a head section thereof to come off when turned further, and retracts when turned rightward, and
wherein the anti-theft mechanism is constituted by containing the right screw part and the left screw part.
